# FASCICULE DE BREVET EUROPEEN

(11) **EP 3 249 258 B1**
(45) Date de publication et mention de la délivrance du brevet: **29.04.2020**
(21) Numéro de dépôt: 17171456.1
(22) Date de dépôt: 17.05.2017
(51) Int. Cl.: F16F 15/14

(54) **DISPOSITIF D'AMORTISSEMENT PENDULAIRE**
PENDEL-DÄMPFUNGSVORRICHTUNG
PENDULUM DAMPING DEVICE

(30) Priorité: 24.05.2016 FR 1654627
(43) Date de publication de la demande: 29.11.2017
(73) Titulaire: Valeo Embrayages, 80009 Amiens Cedex 2 (FR)
(72) Inventeur: GRIECO, Giovanni, 80009 AMIENS (FR); VERHOOG, Roel, 80009 AMIENS (FR)
(74) Mandataire: Cardon, Nicolas

(56) Documents cités:
- DE-A1-102010 049 929
- DE-A1-102013 202 686
- DE-A1-102013 221 537
- DE-A1-102014 217 845
- FR-A1- 3 017 674
- US-A- 2 585 382

## Description

La présente invention concerne un dispositif d'amortissement pendulaire, notamment pour un système de transmission de véhicule automobile.

Dans une telle application, le dispositif d'amortissement pendulaire peut être intégré à un système d'amortissement de torsion d'un embrayage apte à relier sélectivement le moteur thermique à la boîte de vitesses, afin de filtrer les vibrations dues aux acyclismes du moteur. Un tel système d'amortissement de torsion est par exemple un double volant amortisseur.

En variante, dans une telle application, le dispositif d'amortissement pendulaire peut être intégré à un disque de friction de l'embrayage ou à un convertisseur de couple hydrodynamique ou à un volant solidaire du vilebrequin ou à un double embrayage à sec ou humide.

Un tel dispositif d'amortissement pendulaire met classiquement en œuvre un support et un ou plusieurs corps pendulaires mobiles par rapport à ce support, le déplacement par rapport au support de chaque corps pendulaire étant guidé par un ou plusieurs organes de roulement.

Lorsque des couples de valeur élevée, encore appelés « sur-couples » par la suite, se propagent dans le système de transmission au sein duquel est implanté le dispositif d'amortissement pendulaire, des efforts importants peuvent s'appliquer sur le support du dispositif, ce dernier étant rigidement relié à un élément de ce système de transmission. Le support ou toute pièce intermédiaire permettant cette liaison rigide entre le support et l'élément du système de transmission peut alors être fragilisé, voire même se casser. De tels sur-couples se produisent notamment lorsque le dispositif d'amortissement pendulaire est intégré à un disque de friction de l'embrayage, puisque le dispositif d'amortissement pendulaire peut alors être directement soumis au couple venant de l'arbre de boîte de vitesses, c'est-à-dire au couple des roues du véhicule.

Afin de protéger le dispositif d'amortissement pendulaire de telles valeurs élevées de couple, il est par exemple connu de la demande WO 2013/034125 d'implanter un dispositif d'amortissement pendulaire sur un arbre et d'interposer entre cet arbre et le support du dispositif d'amortissement pendulaire une rondelle faisant office de limiteur de couple. Un limiteur de couple est coûteux, encombrant, et présente un couple de déclenchement peu précis.

On connaît de la demande DE 10 2013 202 686 des languettes reliant un plateau de pression et un support de dispositif d'amortissement pendulaire. Ces languettes sont planes, et non ondulées, de sorte qu'elles ne sont pas élastiquement déformables, circonférentiellement parlant.

On connait de la demande DE 10 2013 221537 des éléments de liaison adaptés pour transmettre un couple entre des moyens d'amortissement pendulaires et un support. Chaque élément de liaison comprend un moyen de retenu et un ressort.

On connaît de la demande FR 3 017 674 un organe de liaison liant des moyens d'amortissement pendulaires à un arbre de sortie afin d'améliorer la liaison entre les différents éléments pour réduire le bruit en fonctionnement.

L'invention a pour objet de protéger le dispositif d'amortissement pendulaire des sur-couples, évitant notamment que des efforts de cisaillement, quelle que soit leur nature, ne viennent endommager le dispositif d'amortissement pendulaire.

L'invention y parvient, selon l'un de ses aspects, à l'aide d'un composant pour système de transmission de véhicule, comprenant :
- un premier sous-ensemble présentant une entrée et une sortie entre lesquelles un couple peut être transmis, et
- un deuxième sous-ensemble formant un dispositif d'amortissement pendulaire, et disposé hors du chemin du couple transmis par le premier sous-ensemble,
le premier et le deuxième sous-ensemble étant reliés entre eux par au moins un organe de liaison élastiquement déformable circonférentiellement.

La liaison assurée entre le premier sous-ensemble, disposé dans le chemin du couple, et le dispositif d'amortissement pendulaire permet ainsi d'absorber au moins en partie, voire en totalité, les sur-couples grâce à la déformation élastique que cette liaison permet. Contrairement au cas d'un limiteur de couple, l'organe de liaison relie en permanence avec une raideur non nulle le premier et le deuxième sous-ensemble, y compris lorsque des sur-couples se produisent.

L'organe de liaison peut également assurer un centrage du dispositif d'amortissement pendulaire sur le premier sous-ensemble.

Au sens de la présente demande :
- « axialement » signifie « parallèlement à l'axe de rotation du support du dispositif d'amortissement pendulaire »,
- « radialement » signifie « le long d'un axe appartenant à un plan orthogonal à l'axe de rotation du support du dispositif d'amortissement pendulaire et coupant cet axe de rotation du support»,
- « angulairement » ou « circonférentiellement » signifie « autour de l'axe de rotation du support du dispositif d'amortissement pendulaire»,
- « orthoradialement » signifie « perpendiculairement à une direction radiale »,
- « solidaire » signifie « rigidement couplé »,
- la position de repos du dispositif d'amortissement pendulaire est celle dans laquelle ses corps pendulaires sont centrifugés sans être soumis à des oscillations de torsion provenant des acyclismes du moteur thermique.

L'organe de liaison peut également être élastiquement déformable axialement. Autrement dit, dans ce cas, la liaison entre premier sous-composant disposé dans le chemin du couple et le dispositif d'amortissement pendulaire permet non seulement une déformation élastique dans le sens circonférentiel, mais également dans le sens axial. Une telle liaison permet alors également de compenser le pompage axial ou les flexions autour d'un axe perpendiculaire à l'axe de rotation du support et se propageant dans le système de transmission.

L'organe de liaison comprend selon l'invention au moins une partie ondulée. Cette partie ondulée présente lorsque l'on se déplace circonférentiellement, une succession de zones axialement décalées deux à deux.

Le deuxième sous-ensemble formant le dispositif d'amortissement pendulaire peut être disposé radialement à l'extérieur du premier sous-ensemble. La surface radialement extérieure du premier sous-ensemble peut définir une succession de dents radiales et la surface radialement intérieure du deuxième sous-ensemble peut définir une succession de dents radiales.

Un jeu circonférentiel peut exister entre les dents radiales de la surface radialement extérieure du premier sous-ensemble et les dents radiales de la surface radialement intérieure du deuxième sous-ensemble et, à partir d'un certain seuil de sur-couple, ce jeu circonférentiel est comblé par la venue en butée des dents entre elles. Cette venue en butée de dents de la surface radialement extérieure du premier sous-composant contre des dents de la surface radialement intérieure du deuxième sous-composant réalise une butée franche permettant de limiter la déformation élastique dans le sens circonférentiel de l'organe de liaison, et donc de protéger cet organe de liaison contre des déformations excessives qui pourraient l'endommager.

Chaque dent radiale de la surface radialement extérieure du premier sous-ensemble peut être circonférentiellement disposée entre deux dents radiales consécutives de la surface radialement intérieure du deuxième sous-ensemble, de sorte qu'en se déplaçant sur un même pourtour, on trouve une alternance de dents radiales de la surface radialement extérieure du premier sous-ensemble et de dents radiales de la surface radialement intérieure du deuxième sous-ensemble.

Chaque dent radiale de la surface radialement intérieure du deuxième sous-ensemble appartient par exemple au support du dispositif d'amortissement pendulaire.

L'organe de liaison peut alors être relié au premier sous-ensemble via les dents radiales de ce dernier et être relié au deuxième sous-ensemble via les dents radiales de ce dernier.

Selon un premier exemple de mise en œuvre de l'invention, l'organe de liaison est une rondelle ondulée fixée à la fois au premier sous-ensemble et au deuxième sous-ensemble, notamment au support du dispositif d'amortissement pendulaire. Cette rondelle présente par exemple lorsque l'on se déplace circonférentiellement une succession de zones axialement décalées deux à deux. Une telle rondelle est par exemple obtenue à partir d'une rondelle de type Onduflex®

Selon ce premier exemple de mise en œuvre, le composant peut comprendre des premiers éléments de fixation de la rondelle ondulée au premier sous-ensemble et des deuxièmes éléments de fixation de la rondelle ondulée au deuxième sous-ensemble, chaque premier élément de fixation alternant circonférentiellement avec un deuxième élément de fixation.

La rondelle présente par exemple :
- une pluralité de premières portions, chaque première portion recevant un premier élément de fixation de la rondelle ondulée au premier sous-ensemble et
- une pluralité de deuxièmes portions, chaque deuxième portion recevant un deuxième élément de fixation de la rondelle ondulée au deuxième sous-ensemble,
   chaque première portion de la rondelle ondulée alternant avec une deuxième portion de la rondelle ondulée dans le sens circonférentiel.

Les premières portions peuvent occuper une position axiale commune étant la même que celle occupée par les deuxièmes portions. La rondelle ondulée comprend alors d'autres portions décalées axialement par rapport à ces premières et deuxièmes portions.

Les premiers et deuxièmes éléments de liaison peuvent être identiques entre eux, étant par exemple des rivets.

Selon le premier exemple de mise en œuvre de l'invention, la rondelle ondulée peut porter au moins un bras venant en appui axial contre l'un du premier et du deuxième sous-ensemble. Ce bras peut alors être disposé radialement dans le prolongement d'une portion de la rondelle ondulée recevant un élément de fixation de la rondelle ondulée à l'autre du premier et du deuxième sous-ensemble.

Un tel bras peut non seulement limiter le déplacement axial relatif entre le premier et le deuxième sous-ensemble, notamment en cas de pompage axial ou de flexions autour d'un axe perpendiculaire à l'axe de rotation du support, mais il peut également permettre l'exercice de frottement entre le premier et le deuxième sous-ensemble. Ce frottement peut alors permettre d'absorber une partie de l'énergie associée aux sur-couples.

Selon une première variante, le bras vient en appui axial contre le deuxième sous-ensemble et il est disposé radialement dans le prolongement vers l'extérieur d'une première portion de la rondelle ondulée, cette première portion recevant un premier élément de fixation. Selon cette variante, le composant peut comprendre autant de bras que de premiers éléments de fixation de la rondelle ondulée au premier sous-ensemble. Selon cette première variante, le bras peut être solidaire du premier sous-ensemble.

Selon une deuxième variante, le bras vient en appui axial contre le premier sous-ensemble et il est disposé radialement dans le prolongement vers l'intérieur d'une deuxième portion de la rondelle ondulée, cette deuxième portion recevant un deuxième élément de fixation. Selon cette variante, le composant peut comprendre autant de bras que de deuxièmes éléments de fixation de la rondelle ondulée au deuxième sous-ensemble. Selon cette deuxième variante, le bras peut être solidaire du deuxième sous-ensemble.

En variante, le composant comprend :
- au moins un bras en appui axial contre le deuxième sous-ensemble et ce bras est disposé radialement dans le prolongement vers l'extérieur d'une première portion de la rondelle ondulée, cette première portion recevant un premier élément de fixation, ce bras étant notamment solidaire du premier sous-ensemble, et
- au moins un bras en appui axial contre le premier sous-ensemble et ce bras est disposé radialement dans le prolongement vers l'intérieur d'une deuxième portion de la rondelle ondulée, cette deuxième portion recevant un deuxième élément de fixation, ce bras étant notamment solidaire du deuxième sous-ensemble.

Selon cette variante, le nombre de bras peut être égal à la somme du nombre de premiers éléments de fixation et du nombre de deuxièmes éléments de fixation.

Selon un deuxième exemple de mise en œuvre de l'invention, l'organe de liaison comprend une pluralité de languettes ondulées se succédant circonférentiellement, chaque languette ondulée étant fixée à la fois au premier sous-ensemble et au deuxième sous-ensemble, notamment au support du dispositif d'amortissement pendulaire. La présence des ces languettes ondulées différentes peut permettre de mieux répartir les déformations circonférentielles et, le cas échéant le pompage axial ou les flexions mentionnées ci-dessus, que l'organe de liaison va compenser en tout ou partie. Le coût de l'organe de liaison peut par ailleurs être réduit.

Le nombre de languettes ondulées est par exemple compris entre deux et six, étant notamment égal à quatre.

Chaque languette ondulée présente par exemple lorsque l'on se déplace circonférentiellement une succession de zones axialement décalées deux à deux.

Chaque languette ondulée peut être fixée au premier sous-ensemble via au moins un premier élément de fixation et au deuxième sous-ensemble via au moins un deuxième élément de fixation, les languettes ondulées étant positionnées de sorte qu'en se déplaçant sur un même pourtour, on trouve une alternance de premiers et de deuxièmes éléments de fixation. Autrement dit, les languettes ondulées se succédant circonférentiellement ne sont alors pas montées « tête-bêche ».

Les premiers et deuxièmes éléments de liaison peuvent être identiques entre eux, étant par exemple des rivets.

Chaque languette ondulée présente par exemple :
- une première portion recevant un premier élément de fixation de la languette ondulée au premier sous-ensemble et
- une deuxième portion recevant un deuxième élément de fixation de la languette ondulée au deuxième sous-ensemble.

D'une languette ondulée à l'autre, la première, respectivement deuxième, portion peut occuper une même position circonférentielle sur la languette.

Au sein d'une même languette ondulée, la première portion peut occuper une même position axiale que celle occupée par la deuxième portion. La languette ondulée comprend alors au moins une portion décalée axialement par rapport à ces première et deuxième portions.

Selon le deuxième exemple de mise en œuvre de l'invention, la languette ondulée peut porter au moins un bras venant en appui axial contre l'un du premier et du deuxième sous-ensemble. Ce bras peut alors être disposé radialement dans le prolongement d'une portion de la languette ondulée recevant un élément de fixation de la rondelle ondulée à l'autre du premier et du deuxième sous-ensemble.

Un tel bras peut non seulement limiter le déplacement axial relatif entre le premier et le deuxième sous-ensemble, notamment en cas de pompage axial ou de flexions autour d'un axe perpendiculaire à l'axe de rotation, mais il peut également permettre l'exercice de frottement entre le premier et le deuxième sous-ensemble pour permettre d'absorber une partie de l'énergie associée aux sur-couples.

Selon une première variante, le bras vient en appui axial contre le deuxième sous-ensemble et il est disposé radialement dans le prolongement vers l'extérieur d'une première portion de la languette ondulée, cette première portion recevant un premier élément de fixation. Selon cette variante, le composant peut comprendre autant de bras que de premiers éléments de fixation en considérant toutes les languettes ondulées. Selon cette première variante, le bras peut être solidaire du premier sous-ensemble.

Selon une deuxième variante, le bras vient en appui axial contre le premier sous-ensemble et il est disposé radialement dans le prolongement vers l'intérieur d'une deuxième portion de la languette ondulée, cette deuxième portion recevant un deuxième élément de fixation. Selon cette variante, le composant peut comprendre autant de bras que de deuxièmes éléments de fixation en considérant toutes les languettes ondulées. Selon cette deuxième variante, le bras peut être solidaire du deuxième sous-ensemble.

En variante, le composant comprend :
- au moins un bras en appui axial contre le deuxième sous-ensemble et ce bras est disposé radialement dans le prolongement vers l'extérieur d'une première portion d'une languette ondulée, cette première portion recevant un premier élément de fixation, ce bras étant notamment solidaire du premier sous-ensemble, et
- au moins un bras en appui axial contre le premier sous-ensemble et ce bras est disposé radialement dans le prolongement vers l'intérieur d'une deuxième portion d'une languette ondulée, cette deuxième portion recevant un deuxième élément de fixation, ce bras étant notamment solidaire du deuxième sous-ensemble.

Selon cette variante, le nombre de bras peut être égal à la somme du nombre de premiers éléments de fixation et du nombre de deuxièmes éléments de fixation, en considérant l'ensemble des languettes ondulées.

Selon le deuxième exemple de mise en œuvre, au moins une languette ondulée peut comprendre une portion formant un aller-retour axial, ladite portion étant reçue dans l'espace libre ménagé circonférentiellement entre le premier sous-ensemble et le deuxième sous-ensemble et définissant le jeu circonférentiel précité.

Selon l'un ou l'autre des exemples de mise en œuvre ci-dessus, l'organe de liaison peut être réalisé en acier ou en acier à ressort.

Dans tout ce qui précède, le dispositif d'amortissement pendulaire peut comprendre un support mobile en rotation autour d'un axe et au moins un corps pendulaire mobile par rapport au support, le déplacement de ce corps pendulaire étant guidé par au moins un organe de roulement.

Dans tout ce qui précède, le dispositif d'amortissement pendulaire peut comprendre deux organes de roulement guidant le déplacement de la masse pendulaire par rapport au support.

Chaque organe de roulement peut coopérer avec au moins une première piste de roulement solidaire du support et avec au moins une deuxième piste de roulement solidaire de la masse pendulaire.

Selon une première réalisation préférée du deuxième sous-ensemble du composant, le dispositif d'amortissement pendulaire comprend un unique support et chaque corps pendulaire comprend une première masse pendulaire disposée axialement d'un premier côté du support et une deuxième masse pendulaire disposée axialement d'un deuxième côté du support, la première et la deuxième masses pendulaires étant rigidement reliées entre elles par une ou plusieurs entretoises de liaisons.

Selon cette première réalisation préférée, l'organe de roulement peut coopérer avec une seule première piste de roulement et avec une seule deuxième piste de roulement, et cette deuxième piste de roulement est définie par une entretoise de liaison du corps pendulaire. Une portion du contour de cette entretoise de liaison définit par exemple la deuxième piste de roulement. En variante, un revêtement peut être déposé sur cette portion du contour de l'entretoise de liaison pour former la deuxième piste de roulement. Une telle entretoise de liaison est par exemple emmanchée en force via chacune de ses extrémités axiales dans une ouverture ménagée dans une des masses pendulaires. En variante, l'entretoise de liaison peut être soudée ou vissée ou rivetée via ses extrémités axiales sur chacune de la première et de la deuxième masse pendulaire.

Selon cette première réalisation préférée du deuxième sous-ensemble du composant, le déplacement de chaque corps pendulaire par rapport au support peut être guidé par au moins deux organes de roulement, notamment exactement deux organes de roulement. Deux entretoises de liaison coopérant chacune avec un organe de roulement peuvent être prévues.

Chaque organe de roulement peut alors être uniquement sollicité en compression entre les première et deuxième pistes de roulement mentionnées ci-dessus. Ces première et deuxième pistes de roulement coopérant avec un même organe de roulement peuvent être au moins en partie radialement en regard, c'est-à-dire qu'il existe des plans perpendiculaires à l'axe de rotation dans lesquels ces pistes de roulement s'étendent toutes les deux.

Selon la première réalisation préférée, chaque organe de roulement peut être reçu dans une fenêtre du support recevant déjà une entretoise de liaison et ne recevant aucun autre organe de roulement. Cette fenêtre est par exemple définie par un contour fermé dont une portion définit la première piste de roulement solidaire du support qui coopère avec cet organe de roulement.

Selon une deuxième réalisation préférée du deuxième sous-ensemble du composant, le dispositif d'amortissement pendulaire comprend encore un unique support et le corps pendulaire comprend encore une première et une deuxième masse pendulaire axialement décalées et rigidement reliées entre elles par une ou plusieurs entretoises de liaison mais chaque organe de roulement coopère d'une part avec une seule première piste de roulement solidaire du support, et d'autre part avec deux deuxièmes pistes de roulement solidaires du corps pendulaire. Chaque masse pendulaire présente alors une ouverture dont une partie du contour définit une de ces deuxièmes pistes de roulement.

Selon cette deuxième réalisation préférée, chaque entretoise de liaison regroupe par exemple plusieurs rivets, et cette entretoise de liaison est reçue dans une fenêtre du support, tandis que l'organe de roulement est reçu dans une ouverture du support, distincte d'une fenêtre recevant une entretoise de liaison.

Selon cette deuxième réalisation préférée, deux organes de roulement peuvent guider le déplacement du corps pendulaire par rapport au support, et chaque organe de roulement coopère avec une première piste de roulement dédiée à cet organe de roulement et avec deux deuxièmes pistes de roulement dédiées à cet organe de roulement.

Selon cette deuxième réalisation préférée, chaque organe de roulement peut alors comprendre successivement axialement:
- une portion disposée dans une ouverture de la première masse pendulaire et coopérant avec la deuxième piste de roulement formée par une partie du contour de cette ouverture,
- une portion disposée dans une ouverture du support et coopérant avec la première piste de roulement formée par une partie du contour de cette ouverture, et
- une portion disposée dans une ouverture de la deuxième masse pendulaire et coopérant avec la deuxième piste de roulement formée par une partie du contour de cette ouverture.

Selon la première ou la deuxième réalisation préférée, deux organes de liaison distincts peuvent relier le support du dispositif d'amortissement pendulaire au premier sous-élément, un premier organe de liaison étant disposé axialement d'un premier côté du support et un deuxième organe de liaison étant disposé axialement d'un deuxième côté du support.

Chacun de ces deux organes de liaison est par exemple selon le premier, respectivement deuxième, exemple de mise en œuvre tel que décrit ci-dessus. En variante, le premier organe de liaison est selon le premier exemple de mise en œuvre tel que décrit ci-dessus et le deuxième organe de liaison est selon le deuxième exemple de mise en œuvre tel que décrit ci-dessus.

Selon une troisième réalisation préférée, le dispositif d'amortissement pendulaire comprend deux supports axialement décalés et solidaires, le corps pendulaire comprenant alors une unique masse pendulaire disposée axialement entre les deux supports, ou le corps pendulaire comprenant plusieurs masses pendulaires solidarisées entre elles. Toutes ces masses pendulaires d'un même corps pendulaire peuvent être disposées axialement entre les deux supports. En variante seule(s) certaine(s) masse(s) pendulaire(s) du corps pendulaire s'étend(ent) axialement entre les deux supports, d'autre(s) masse(s) pendulaire(s) de ce corps pendulaire s'étendant axialement au-delà de l'un ou de l'autre des supports.

Selon cette troisième réalisation préférée, seul un organe de liaison est prévu entre le premier sous-ensemble et le deuxième sous-ensemble du composant. Cet organe de liaison, qui est par exemple une rondelle ondulée selon le premier exemple de mise en œuvre ci-dessus ou une pluralité de languettes ondulées selon le deuxième exemple de mise en œuvre ci-dessus, relie un seul des supports au premier sous-ensemble du composant.

Selon une variante de cette troisième réalisation préférée, deux organes de liaison distincts peuvent être prévus entre le premier sous-ensemble et le deuxième sous-ensemble du composant :
- un premier organe de liaison, par exemple une rondelle ondulée selon le premier exemple de mise en œuvre ci-dessus ou une pluralité de languettes ondulées selon le deuxième exemple de mise en œuvre ci-dessus, relie le premier support au premier sous-ensemble, et
- un deuxième organe de liaison, identique ou différent du premier organe de liaison, relie le deuxième support au premier sous-ensemble du composant.

Dans tout ce qui précède, le dispositif d'amortissement pendulaire peut comprendre au moins un organe d'amortissement de venue en butée du corps pendulaire contre le support dans les positions suivantes :
- la position à l'issue d'un déplacement dans le sens trigonométrique de ce corps pendulaire depuis la position de repos pour filtrer une oscillation de torsion, et/ou
- la position à l'issue d'un déplacement dans le sens non-trigonométrique de ce corps pendulaire depuis la position de repos pour filtrer une oscillation de torsion.

Cet organe d'amortissement de venue en butée est alors porté par le corps pendulaire et apte à venir simultanément en contact avec le corps pendulaire et le support pour tout ou partie des positions relatives précitées du corps pendulaire par rapport au support.

Chaque organe d'amortissement de venue en butée peut être dédié à une entretoise de liaison du corps pendulaire lorsque ce dernier présente deux masses pendulaires reliées entre elles par une telle entretoise de liaison. Chaque organe d'amortissement de venue en butée peut présenter des propriétés élastiques permettant l'amortissement des chocs liés à la venue en butée du corps pendulaire contre le support. Cet amortissement est alors permis par une compression de l'organe d'amortissement de venue en butée complémentaire, ce dernier étant par exemple en élastomère ou en caoutchouc.

Dans tout ce qui précède, l'un au moins du support et du corps pendulaire peut porter au moins une pièce d'interposition axiale, cette pièce d'interposition axiale étant notamment un revêtement déposé sur le support ou sur la masse pendulaire. En variante, la pièce d'interposition axiale peut être un patin porté par le support ou par le corps pendulaire. Ce patin peut être en plastique et il peut être accroché sur le support, respectivement sur le corps pendulaire, via une ou plusieurs pattes de fixation montées dans un ou plusieurs trous du support, respectivement du corps pendulaire. Une telle pièce d'interposition peut ainsi limiter le déplacement axial du corps pendulaire par rapport au support, évitant ainsi les chocs axiaux entre lesdites pièces, et ainsi une usure et des bruits non souhaités, notamment lorsque le support et/ou la masse pendulaire sont en métal.

Chaque organe de roulement est par exemple un rouleau de section circulaire dans un plan perpendiculaire à l'axe de rotation du support. Ce rouleau peut comprendre plusieurs portions cylindriques successives de rayon différent. Les extrémités axiales du rouleau peuvent être dépourvues de rebord annulaire fin. Le rouleau est par exemple réalisé en acier. Le rouleau peut être creux ou plein.

Dans tout ce qui précède, le dispositif comprend par exemple un nombre de corps pendulaires compris entre deux et huit, notamment trois, quatre, cinq ou six corps pendulaires. Tous ces corps pendulaires peuvent se succéder circonférentiellement. Le dispositif peut ainsi comprendre une pluralité de plans perpendiculaires à l'axe de rotation dans chacun desquels tous les corps pendulaires sont disposés.

Dans tout ce qui précède la forme des premières et des deuxièmes pistes de roulement précitées peut être telle que chaque corps pendulaire soit uniquement déplacé par rapport au support en translation autour d'un axe fictif parallèle à l'axe de rotation du support.

En variante, la forme des pistes de roulement peut être telle que chaque corps pendulaire soit déplacé par rapport au support à la fois :
- en translation autour d'un axe fictif parallèle à l'axe de rotation du support et,
- également en rotation autour du centre de gravité de ladite masse pendulaire, un tel mouvement étant encore appelé « mouvement combiné ».

Chaque corps pendulaire peut être accordé à l'ordre d'excitation d'un moteur thermique à deux cylindres, encore appelé « ordre 1 ».

Dans tout ce qui précède, le support peut être réalisé d'une seule pièce, étant par exemple entièrement métallique.

Le composant peut être un double volant amortisseur, un convertisseur de couple hydrodynamique, un volant solidaire du vilebrequin, un double embrayage à sec ou humide, un composant de système de transmission hybride, un simple embrayage humide, ou un disque de friction d'embrayage.

Le support du dispositif d'amortissement pendulaire peut alors être l'un parmi :
- un voile du composant,
- une rondelle de guidage du composant,
- une rondelle de phasage du composant, ou
- un support distinct dudit voile, de ladite rondelle de guidage et de ladite rondelle de phasage.

Le support peut être disposé à l'entrée ou à la sortie du composant, les termes « entrée » et « sortie » s'appréciant dans le sens de transmission du couple moteur du vilebrequin vers les roues du véhicule.

Dans le cas où le dispositif est intégré à un volant solidaire du vilebrequin, le support peut être solidaire de ce volant primaire.

Dans un cas particulier, le composant forme un disque de friction pour embrayage. Le premier sous-ensemble comprend alors le moyeu du disque de friction. Dans ce cas, les dents radiales du premier sous-ensemble peuvent être définies par la surface radialement extérieure de ce moyeu.

Dans ce cas particulier, l'organe de liaison relie par exemple le moyeu du disque de friction au support du dispositif d'amortissement pendulaire.

L'invention a encore pour objet, selon un autre de ses aspects, un composant pour système de transmission de véhicule, comprenant :
- un premier sous-ensemble présentant une entrée et une sortie entre lesquelles un couple peut être transmis, et
- un deuxième sous-ensemble formant un dispositif d'amortissement pendulaire, et disposé hors du chemin du couple transmis par le premier sous-ensemble,
le premier et le deuxième sous-ensemble étant reliés entre eux par au moins un organe de liaison élastiquement déformable circonférentiellement,
l'organe de liaison portant au moins un bras venant en appui axial contre l'un du premier et du deuxième sous-ensemble, ce bras étant disposé radialement dans le prolongement d'une portion de l'organe de liaison apte à recevoir un élément de fixation à l'autre du premier et du deuxième sous-ensemble.

Le bras peut être distinct de la portion de l'organe de liaison recevant l'élément de fixation.

Tout ce qui précède peut s'appliquer à cet autre aspect de l'invention, notamment le premier ou le deuxième exemple de mise en œuvre décrit précédemment.

L'invention pourra être mieux comprise à la lecture de la description qui va suivre d'exemples non limitatifs de mise en œuvre de celle-ci et à l'examen du dessin annexé sur lequel :
- la figure 1 représente de façon schématique un composant pour système de transmission avec un organe de liaison selon un premier exemple de mise en œuvre de l'invention,
- la figure 2 représente de façon isolée l'organe de liaison de la figure 1,
- la figure 3 représente un détail de la figure 2,
- la figure 4 représente un détail de la figure 1,
- les figures 5 et 6 représentent, respectivement à l'état éclaté et à l'état assemblé, un composant pour système de transmission avec un organe de liaison selon un deuxième exemple de mise en œuvre de l'invention,
- la figure 7 représente de façon isolée une languette ondulée d'un organe de liaison selon le deuxième exemple de mise en œuvre de l'invention,
- la figure 8 représente, similairement à la figure 7, une languette ondulée d'une alternative du deuxième exemple de mise en œuvre de l'invention, et
- la figure 9 est une vue partielle d'un composant pour système de transmission muni de languettes selon la figure 8.

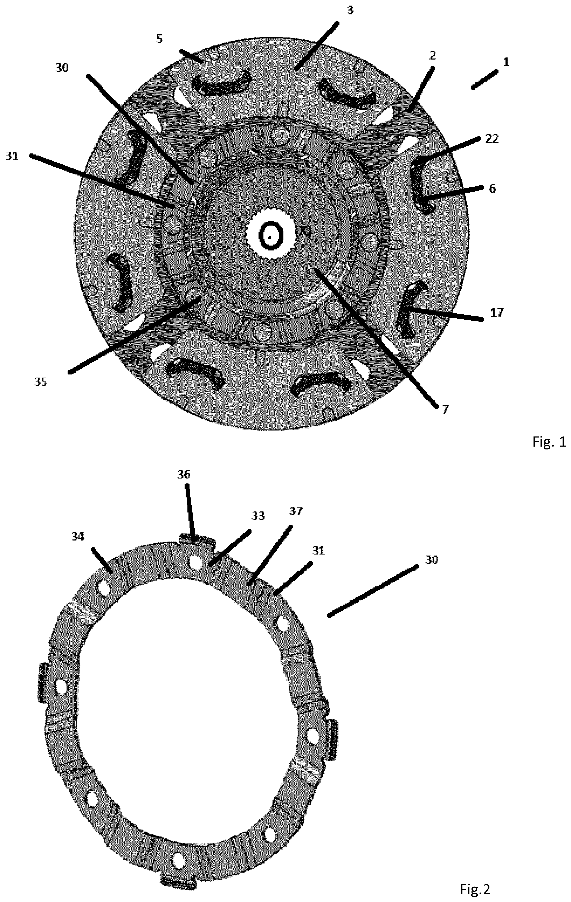

On a représenté sur les figures 1 à 4 un composant pour système de transmission 10 selon un premier exemple de mise en œuvre de l'invention.

Ce composant 10 est ici un disque de friction d'embrayage, par exemple associé à un moteur thermique notamment à deux, trois ou quatre cylindres. Le composant 10 comprend ici :
- un premier sous-ensemble présentant une entrée et une sortie entre lesquelles un couple peut être transmis, et
- un deuxième sous-ensemble formant un dispositif d'amortissement pendulaire 1, et disposé hors du chemin du couple transmis par le premier sous-ensemble.

Du premier sous-ensemble, seul est représenté sur la figure 1 le moyeu 7 du disque de friction qui définit la sortie en couple de ce sous-ensemble. L'entrée en couple de ce premier sous-ensemble est, de façon connue, formée par des garnitures de friction non représentées.

Le dispositif d'amortissement pendulaire 1 formé par le deuxième sous-ensemble comprend dans l'exemple considéré:
- un support 2 apte à se déplacer en rotation autour d'un axe X, et
- une pluralité de corps pendulaires 3 mobiles par rapport au support 2.

Dans l'exemple considéré, quatre corps pendulaires 3 sont prévus, étant répartis de façon uniforme sur le pourtour de l'axe X.

Le support 2 est ici réalisé d'un seul tenant, ayant une forme de plaque s'étendant entre deux côtés 4 sensiblement parallèles.

Comme on peut le voir sur les figures, chaque corps pendulaire 3 comprend dans l'exemple considéré :
- deux masses pendulaires 5, l'une de ces masses pendulaires 5 étant une première masse pendulaire 5 disposée axialement en regard d'un premier côté 4 du support, l'autre de ces masses pendulaires 5 étant une deuxième masse pendulaire 5 disposée axialement en regard d'un deuxième côté 4 du support 2, et
- deux entretoises de liaison 6 solidarisant les deux masses pendulaires 5.

Les entretoises de liaison 6 sont dans l'exemple considéré décalées angulairement.

Sur les figures, le dispositif d'amortissement pendulaire 1 est au repos, c'est-à-dire qu'il ne filtre pas les oscillations de torsion se propageant dans le système de transmission du fait des acyclismes du moteur thermique.

Dans l'exemple des figures, chaque extrémité d'une entretoise de liaison 6 est emmanchée en force dans une ouverture 17 ménagée dans une masse pendulaire respective, de manière à solidariser ces deux masses pendulaires 5 Dans des variantes, chacune de ces extrémités pourrait être rivetée ou soudée, ou vissée sur une des masses pendulaires 5. Chaque entretoise de liaison 6 s'étend en partie dans une fenêtre ménagée dans le support 2, cette fenêtre définissant un espace vide à l'intérieur du support 2 délimité par un contour fermé 20.

Bien qu'ils ne soient pas représentés, le dispositif 1 comprend encore dans l'exemple considéré des organes de roulement guidant le déplacement des corps pendulaires 3 par rapport au support 2. Les organes de roulement sont par exemple des rouleaux.

Dans l'exemple décrit, le mouvement par rapport au support 2 de chaque corps pendulaire 3 est guidé par deux organes de roulement, chacun d'entre eux coopérant ici avec l'une des entretoises de liaison 6 du corps pendulaire 3.

Chaque organe de roulement coopère ici avec une seule première piste de roulement solidaire du support 2, et avec une seule deuxième piste de roulement solidaire du corps pendulaire 3 pour guider le déplacement de ce corps pendulaire 3.

Dans l'exemple considéré, chaque deuxième piste de roulement est formée par une portion du bord radialement extérieur d'une entretoise de liaison 6.

Chaque première piste de roulement est définie par une partie du contour d'une fenêtre précitée.

Chaque première piste de roulement est ainsi disposée radialement en regard d'une deuxième piste de roulement, de sorte qu'une même surface de roulement d'un organe de roulement roule alternativement sur la première piste de roulement et sur la deuxième piste de roulement. La surface de roulement de l'organe de roulement est ici un cylindre de rayon constant.

Comme on le devine notamment sur la figure 1, des organes d'amortissement de venue en butée 22 du corps pendulaire 3 contre le support 2 peuvent être prévus. Chaque entretoise de liaison 6 est alors associée à un tel organe d'amortissement de venue en butée 22, chacun de ces derniers étant configurés pour s'interposer entre cette entretoise de liaison 6 et le bord radialement intérieur de la fenêtre recevant cette entretoise de liaison 6.

Comme on peut le voir sur les figures, au moins un organe de liaison 30 relie le moyeu 7 du disque de friction au support 2 du dispositif d'amortissement pendulaire. Cet organe de liaison 30 peut se déformer élastiquement dans le sens circonférentiel et, de manière avantageuse, également dans le sens axial.

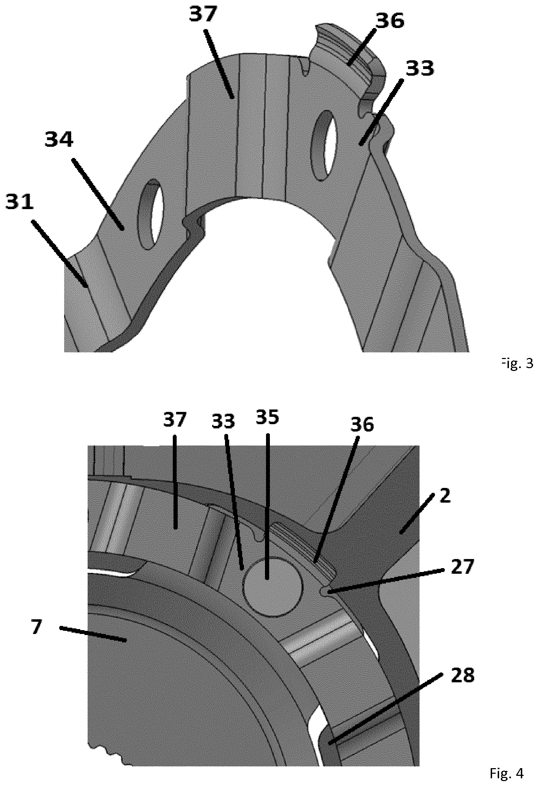

Comme on l'observe notamment sur la figure 4, la surface radialement extérieure du moyeu 7 du disque de friction définit ici une succession de dents radiales 27 et la surface radialement intérieure du support 2 du dispositif d'amortissement pendulaire 1 définit une succession de dents radiales 28.

On observe également sur la figure 4 que chaque dent radiale 28 est circonférentiellement disposée entre deux dents radiales 27 consécutives, de sorte qu'en se déplaçant sur un même pourtour, on trouve une alternance de dents radiales 27 et de dents radiales 28.

Selon le premier exemple de mise en œuvre de l'invention tel que décrit en référence aux figures 1 à 4, l'organe de liaison est une rondelle ondulée 31.

Cette rondelle ondulée 31 est fixée à la fois au moyeu 7 du disque de friction via les dents radiales 27 et au support 2 du dispositif d'amortissement pendulaire 1 via les dents radiales 28. Cette rondelle 31 présente par exemple lorsque l'on se déplace circonférentiellement une succession de zones axialement décalées deux à deux. Une telle rondelle est par exemple obtenue sur la base d'une rondelle de type Onduflex®. On constate que le composant 1 comprend des premiers éléments de fixation 35 de la rondelle ondulée 31 aux dents radiales 27 du moyeu 7 du disque de friction 1, et des deuxièmes éléments de fixation 35 de la rondelle ondulée 31 au support 2 du dispositif d'amortissement pendulaire 1.

On constate sur la figure 1 que chaque premier élément de fixation 35 alterne circonférentiellement avec un deuxième élément de fixation 35. Ici tous ces éléments de fixation 35 sont des rivets.

On constate également sur les figures 1 à 4 que la rondelle ondulée 31 peut présenter:
- une pluralité de premières portions 33, chaque première portion 33 recevant un premier élément de fixation 35 de la rondelle ondulée 31 au moyeu 7 du disque de friction, et
- une pluralité de deuxièmes portions 34, chaque deuxième portion 34 recevant un deuxième élément de fixation 35 de la rondelle ondulée 31 au support 2 du dispositif d'amortissement pendulaire 1.

On constate par ailleurs que chaque première portion 33 de la rondelle ondulée 31 alterne avec une deuxième portion 34 de la rondelle ondulée 31 dans le sens circonférentiel.

On constate également sur la figure 2 que les premières portions 33 de la rondelle ondulée 31 occupent dans l'exemple considéré une même position axiale qui est également celle occupée par les deuxièmes portions 34 de cette rondelle 31. Des portions 37 de la rondelle 31 qui sont décalées axialement par rapport à ces premières 33 et deuxièmes portions 34 existent également.

On constate également, notamment sur les figures 2 et 3 que la rondelle ondulée 31 peut porter une pluralité de bras 36 venant en appui axial contre le support 2 du dispositif d'amortissement pendulaire 2. Chaque bras 36 est ici disposé radialement dans le prolongement d'une portion 33 de la rondelle ondulée 31 recevant un premier élément de fixation 35 au moyeu 7 du disque de friction. Un tel bras 36 présente ici une extrémité libre recourbée venant frotter contre le support 2 via un appui axial.

On constate sur la figure 1 que le nombre de bras 36 peut être égal au nombre de premiers éléments de fixation 35.

La rondelle ondulée 31 est par exemple réalisée en acier ou en acier à ressort.

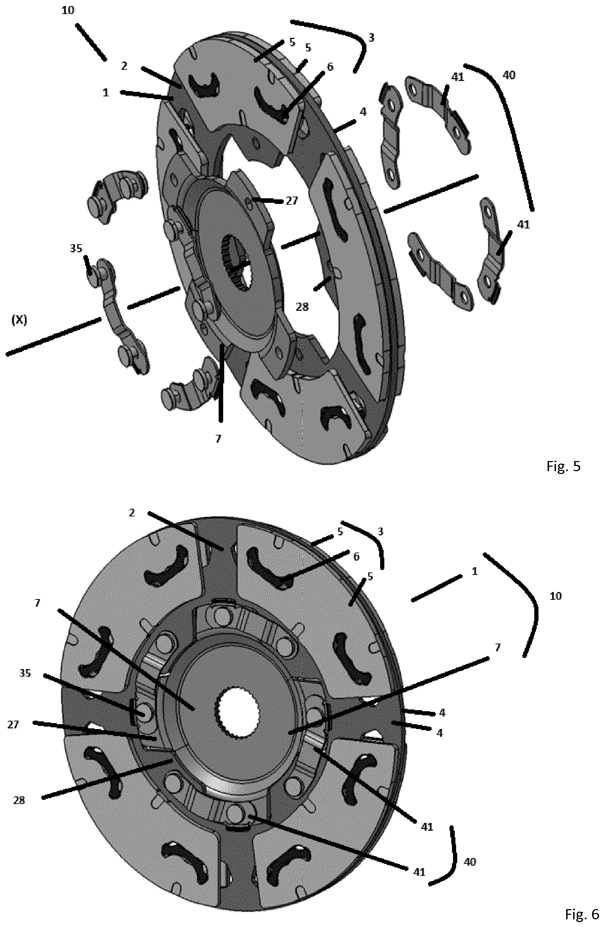

Sur les figures 1 à 4, un seul organe de liaison 30 est représenté. Cependant, le composant 1 peut comprendre deux organes de liaison 30 distincts, chaque organe de liaison 30 étant alors formé par une rondelle ondulée 31 telle que décrite précédemment. Chaque rondelle 31 est alors disposée axialement d'un seul côté du support 2. Dans ce cas, les premiers éléments de fixation 35 peuvent être communs aux deux organes de liaison 30, tout comme les deuxièmes éléments de fixation 35. Autrement dit, un même rivet 35 peut dans l'exemple décrit relier d'une part le moyeu 7 à la rondelle ondulée 31 du premier organe de liaison 30 et d'autre part à la rondelle ondulée 31 du deuxième organe de liaison. On va maintenant décrire en référence aux figures 5 à 9 deux alternatives d'un composant avec un organe de liaison 40 selon un deuxième exemple de mise en œuvre de l'invention.

On observe sur les figures 5 à 9 que deux organes de liaison 40 sont ici prévus, un de ces organes de liaison 40 étant disposé axialement d'un premier côté 4 du support 2 du dispositif d'amortissement pendulaire 1 tandis que l'autre organe de liaison 40 est disposé axialement d'un deuxième côté 4 de ce support 2.

Selon ce deuxième exemple de mise en œuvre de l'invention, l'organe de liaison 40 est formé par une pluralité de languettes ondulées 41 se succédant circonférentiellement, chaque languette ondulée 41 étant fixée à la fois au premier sous-ensemble et au deuxième sous-ensemble. Chaque languette ondulée 41 est ici fixée à une dent radiale 27 du moyeu 7 du disque d'embrayage et à une dent radiale 28 du support 2 du dispositif d'amortissement pendulaire 1.

Le nombre de languettes ondulées 41 est ici égal à quatre.

Chaque languette ondulée 41 présente ici, lorsque l'on se déplace circonférentiellement, une succession de zones axialement décalées deux à deux. Chaque languette ondulée 41 est fixée à une dent radiale 27 du moyeu 7 du disque de friction via un premier élément de fixation 35 et elle est fixée à une dent radiale 28 du support 2 du dispositif d'amortissement pendulaire 1 via un deuxième élément de fixation 35. On constate que les languettes ondulées 41 sont positionnées de sorte qu'en se déplaçant sur un même pourtour, on trouve une alternance de premiers et de deuxièmes éléments de fixation.

Chaque languette ondulée 41 présente sur les figures 5 à 9 :
- une première portion 43 recevant un premier élément de fixation 35 de la languette ondulée 41 au moyeu 7 du disque de friction et
- une deuxième portion 44 recevant un deuxième élément de fixation 35 de la languette ondulée 41 au support 2 du dispositif d'amortissement pendulaire 1.

On observe également sur les figures 5 à 9 que, d'une languette ondulée à l'autre, la première, respectivement deuxième, portion occupe une même position circonférentielle sur la languette.

On observe également sur les figures 5 à 9 qu'au sein d'une même languette ondulée 41, la première portion 43 et la deuxième portion 44 occupent une même position axiale. La languette ondulée comprend alors une portion décalée axialement par rapport à ces première 43 et deuxième 44 portions.

Les premiers 35 et deuxièmes 35 éléments de liaison peuvent être identiques entre eux, étant ici des rivets communs aux deux organes de liaison 40.

Similairement au premier exemple de mise en œuvre décrit précédemment, chaque languette ondulée 41 peut porter un bras 46 venant en appui axial contre le support 2 du dispositif d'amortissement pendulaire 1. Ce bras 46 est ici disposé radialement dans le prolongement d'une première portion 43 de la languette ondulée 41. Le bras 46 présente par exemple une extrémité libre recourbée venant frotter contre le support 2 par appui axial.

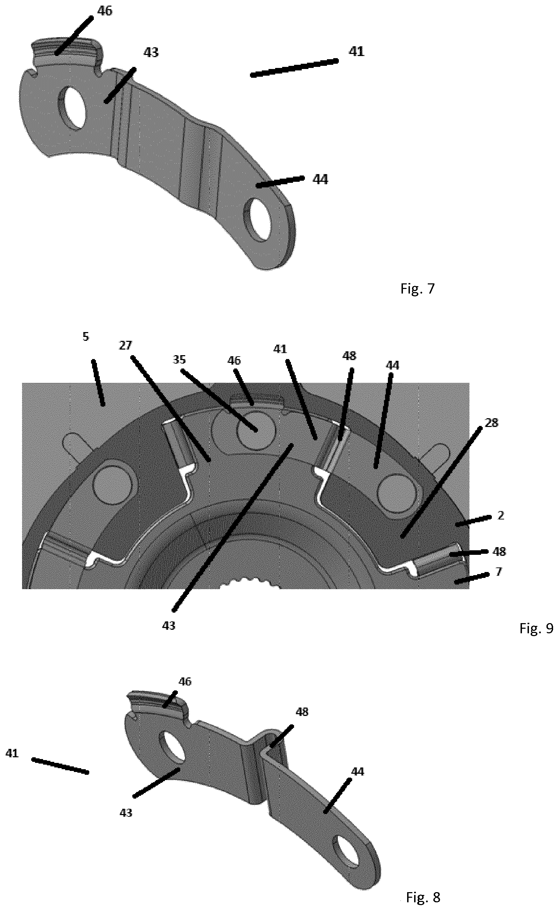

L'alternative des figures 8 et 9 se distingue de celle selon les figures 5 à 7 en ce que la portion 48 de la languette ondulée 41 qui est axialement à distance des première 43 et deuxième 44 portions de cette languette ondulée 41 forme un aller-retour axial reçu dans un espace libre ménagé circonférentiellement entre une dent 27 du moyeu 7 du disque de friction et une dent 28 du support 2 du dispositif d'amortissement pendulaire 1.

Selon le deuxième exemple de mise en œuvre de l'invention, chaque languette 41 peut être réalisée en acier ou en acier à ressort.

Le disque de friction 1 peut comprendre un amortisseur et, le cas échéant, également un pré-amortisseur.

L'invention n'est pas limitée aux exemples qui viennent d'être décrits.

## Revendications

1. Composant (1) pour système de transmission de véhicule, comprenant :
- un premier sous-ensemble présentant une entrée et une sortie (7) entre lesquelles un couple peut être transmis, et
- un deuxième sous-ensemble formant un dispositif d'amortissement pendulaire (1), et disposé hors du chemin du couple transmis par le premier sous-ensemble,
le premier et le deuxième sous-ensemble étant reliés entre eux par au moins un organe de liaison (30, 40) élastiquement déformable circonférentiellement, cet organe de liaison (30, 40) est **caractérisé par** au moins une partie ondulée présentant, circonférentiellement, une succession de zones axialement décalées deux à deux.

2. Composant selon la revendication 1, l'organe de liaison (30, 40) étant également élastiquement déformable axialement.

3. Composant selon la revendication 1 ou 2, le deuxième sous-ensemble (1) étant disposé radialement à l'extérieur du premier sous-ensemble, la surface radialement extérieure du premier sous-ensemble définissant une succession de dents radiales (27), la surface radialement intérieure du deuxième sous-ensemble définissant une succession de dents radiales (28).

4. Composant selon la revendication 3, chaque dent radiale (27) de la surface radialement extérieure du premier sous-ensemble étant circonférentiellement disposée entre deux dents radiales (28) consécutives de la surface radialement intérieure du deuxième sous-ensemble, de sorte qu'en se déplaçant sur un même pourtour, on trouve une alternance de dents radiales (27) de la surface radialement extérieure du premier sous-ensemble et de dents radiales (28) de la surface radialement intérieure du deuxième sous-ensemble.

5. Composant selon l'une quelconque des revendications 1 à 4, l'organe de liaison (30) étant une rondelle ondulée (31) fixée à la fois au premier sous-ensemble et au deuxième sous-ensemble.

6. Composant selon la revendication 5, comprenant des premiers éléments de fixation (35) de la rondelle ondulée (31) au premier sous-ensemble (7) et des deuxièmes éléments de fixation (25) de la rondelle ondulée (31) au deuxième sous-ensemble (1), chaque premier élément de fixation (35) alternant circonférentiellement avec un deuxième élément de fixation (35).

7. Composant selon la revendication 5 ou 6, la rondelle ondulée (31) portant au moins un bras (36) venant en appui axial contre l'un du premier et du deuxième sous-ensemble.

8. Composant selon les revendications 6 et 7, le bras (36) étant disposé radialement dans le prolongement d'une portion (33, 34) de la rondelle ondulée (31) recevant un élément de fixation (35) à l'autre du premier et du deuxième sous-ensemble.

9. Composant selon l'une quelconque des revendications 1 à 4, l'organe de liaison (40) comprenant une pluralité de languettes ondulées (41) se succédant circonférentiellement, chaque languette ondulée (41) étant fixée à la fois au premier sous-ensemble (7) et au deuxième sous-ensemble (1).

10. Composant selon la revendication 9, chaque languette ondulée (41) étant fixée au premier sous-ensemble (7) via au moins un premier élément de fixation (35) et au deuxième sous-ensemble (1) via au moins un deuxième élément de fixation (35), les languettes ondulées (41) étant positionnées de sorte qu'en se déplaçant sur un même pourtour, on trouve une alternance de premiers (35) et de deuxièmes (35) éléments de fixation.

11. Composant selon la revendication 9 ou 10, au moins une languette ondulée (41) portant un bras (46) venant en appui axial contre l'un du premier et du deuxième sous-ensemble.

12. Composant selon la revendication 11, le bras (46) étant disposé radialement dans le prolongement d'une portion (43, 44) de la languette ondulée (41) recevant un élément de fixation (35) à l'autre du premier et du deuxième sous-ensemble.

13. Composant selon l'une quelconque des revendications 9 à 12, au moins une languette ondulée (41) comprenant une portion (48) formant un aller-retour axial, ladite portion (48) étant reçue dans un espace libre ménagé circonférentiellement entre le premier sous-ensemble et le deuxième sous-ensemble.

14. Composant selon l'une quelconque des revendications précédentes, l'organe de liaison (30) étant réalisé en acier ou en acier à ressort.

15. Composant (1) selon l'une quelconque des revendications précédentes, formant un disque de friction pour embrayage.

## Patentansprüche

1. Komponente (1) für ein Kraftübertragungssystem eines Fahrzeugs, welche umfasst:
- eine erste Baugruppe, die einen Eingang und einen Ausgang aufweist (7), zwischen denen ein Drehmoment übertragen werden kann, und
- eine zweite Baugruppe, die eine Pendeldämpfungsvorrichtung (1) bildet und außerhalb des Weges des Drehmoments angeordnet ist, das von der ersten Baugruppe übertragen wird,
wobei die erste und die zweite Baugruppe durch wenigstens ein in Umfangsrichtung elastisch verformbares Verbindungsorgan (30, 40) miteinander verbunden sind, wobei dieses Verbindungsorgan (30, 40) **gekennzeichnet ist durch** wenigstens einen gewellten Teil, der in Umfangsrichtung eine Folge von paarweise axial versetzten Bereichen aufweist.

2. Komponente nach Anspruch 1, wobei das Verbindungsorgan (30, 40) auch axial elastisch verformbar ist.

3. Komponente nach Anspruch 1 oder 2, wobei die zweite Baugruppe (1) radial außerhalb der ersten Baugruppe angeordnet ist, wobei die radial äußere Fläche der ersten Baugruppe eine Folge von radialen Zähnen (27) definiert, wobei die radial innere Fläche der zweiten Baugruppe eine Folge von radialen Zähnen (28) definiert.

4. Komponente nach Anspruch 3, wobei jeder radiale Zahn (27) der radial äußeren Fläche der ersten Baugruppe in Umfangsrichtung zwischen zwei aufeinander folgenden radialen Zähnen (28) der radial inneren Fläche der zweiten Baugruppe angeordnet ist, derart, dass bei einer Bewegung auf ein und demselben Umfang abwechselnd radiale Zähne (27) der radial äußeren Fläche der ersten Baugruppe und radiale Zähne (28) der radial inneren Fläche der zweiten Baugruppe angetroffen werden.

5. Komponente nach einem der Ansprüche 1 bis 4, wobei das Verbindungsorgan (30) eine gewellte Scheibe (31) ist, die gleichzeitig an der ersten Baugruppe und an der zweiten Baugruppe befestigt ist.

6. Komponente nach Anspruch 5, welche erste Elemente zur Befestigung (35) der gewellten Scheibe (31) an der ersten Baugruppe (7) und zweite Elemente zur Befestigung (25) der gewellten Scheibe (31) an der zweiten Baugruppe (1) umfasst, wobei sich jedes erste Befestigungselement (35) in Umfangsrichtung mit einem zweiten Befestigungselement (35) abwechselt.

7. Komponente nach Anspruch 5 oder 6, wobei die gewellte Scheibe (31) wenigstens einen Arm (36) trägt, der axial an einer von der ersten und der zweiten Baugruppe zu Anlage kommt.

8. Komponente nach Anspruch 6 oder 7, wobei der Arm (36) radial in der Verlängerung eines Abschnitts (33, 34) der gewellten Scheibe (31) angeordnet ist, der ein Element zur Befestigung (35) an der anderen von der ersten und der zweiten Baugruppe aufnimmt.

9. Komponente nach einem der Ansprüche 1 bis 4, wobei das Verbindungsorgan (40) mehrere gewellte Zungen (41) umfasst, die in Umfangsrichtung aufeinanderfolgen, wobei jede gewellte Zunge (41) gleichzeitig an der ersten Baugruppe (7) und an der zweiten Baugruppe (1) befestigt ist.

10. Komponente nach Anspruch 9, wobei jede gewellte Zunge (41) an der ersten Baugruppe (7) über wenigstens ein erstes Befestigungselement (35) und an der zweiten Baugruppe (1) über wenigstens ein zweites Befestigungselement (35) befestigt ist, wobei die gewellten Zungen (41) derart positioniert sind, dass bei einer Bewegung auf ein und demselben Umfang abwechselnd erste (35) und zweite (35) Befestigungselemente angetroffen werden.

11. Komponente nach Anspruch 9 oder 10, wobei wenigstens eine gewellte Zunge (41) einen Arm (46) trägt, der axial an einer von der ersten und der zweiten Baugruppe zu Anlage kommt.

12. Komponente nach Anspruch 11, wobei der Arm (46) radial in der Verlängerung eines Abschnitts (43, 44) der gewellten Scheibe (41) angeordnet ist, der ein Element zur Befestigung (35) an der anderen von der ersten und der zweiten Baugruppe aufnimmt.

13. Komponente nach einem der Ansprüche 9 bis 12, wobei wenigstens eine gewellte Zunge (41) einen Abschnitt (48) umfasst, der eine axiale Ausbuchtung bildet, wobei der Abschnitt (48) in einem freien Raum aufgenommen ist, der in Umfangsrichtung zwischen der ersten Baugruppe und der zweiten Baugruppe ausgebildet ist.

14. Komponente nach einem der vorhergehenden Ansprüche, wobei das Verbindungsorgan (30) aus Stahl oder aus Federstahl hergestellt ist.

15. Komponente (1) nach einem der vorhergehenden Ansprüche, welche eine Reibscheibe für eine Kupplung bildet.

## Claims

1. A vehicle transmission system component (1), comprising:
- a first subassembly having an input and an output (7), between which a torque can be transmitted, and
- a second subassembly forming a pendulum-type damping device (1), and disposed outside the path of the torque transmitted by the first subassembly,
wherein the first and the second subassemblies are connected to one another by at least one connecting means (30, 40) capable of being elastically deformed circumferentially, wherein this connecting means (30, 40) comprises at least one waved part comprising, circumferentially, a succession of zones axially offset in pairs.

2. A component according to claim 1, wherein the connecting means (30, 40) can also be elastically deformed axially.

3. A component according to claim 1 or 2, wherein the second subassembly (1) is disposed radially exterior to the first subassembly, the radially external surface of the first subassembly defines a succession of radial teeth (27), and the radially internal surface of the second subassembly defines a succession of radial teeth (28).

4. A component according to claim 3, wherein each radial tooth (27) of the radially external surface of the first subassembly is disposed circumferentially between two consecutive radial teeth (28) of the radially internal surface of the second subassembly, in such a way that, in a trajectory over a given periphery, an alternation of radial teeth (27) of the radially external surface of the first subassembly and of radial teeth (28) of the radially internal surface of the second subassembly is found.

5. A component according to any one of claims 1 to 4, wherein the connecting means (30) is a waved washer (31) fixed both on the first subassembly and on the second subassembly.

6. A component according to claim 5, comprising first elements (35) for fixation of the waved washer (31) on the first subassembly (7) and second elements (25) for fixation of the waved washer (31) on the second subassembly (1), wherein each first fixation element (35) alternates circumferentially with a second fixation element (35).

7. A component according to claim 5 or 6, wherein the waved washer (31) carries at least one arm (36) that becomes axially braced against one of the first and of the second subassembly.

8. A component according to claims 6 and 7, wherein the arm (36) is disposed radially in the prolongation of a portion (33, 34) of the waved tab (31) receiving an element (35) for fixation to the other of the first and of the second subassembly.

9. A component according to any one of claims 1 to 4, wherein the connecting means (40) comprises a plurality of waved tabs (41) disposed in circumferential succession, and each waved tab (41) is fixed both on the first subassembly (7) and on the second subassembly (1).

10. A component according to claim 9, wherein each waved tab (41) is fixed on the first subassembly (7) via at least one first fixation element (35) and on the second subassembly (1) via at least one second fixation element (35), and the waved tabs (41) are positioned in such a way that, in a trajectory over a given periphery, an alternation of first (35) and second (35) fixation elements is found.

11. A component according to claim 9 or 10, wherein at least one waved tab (41) carries an arm (46) that becomes axially braced against one of the first and of the second subassembly.

12. A component according to claim 11, wherein the arm (46) is disposed radially in the prolongation of a portion (43, 44) of the waved tab (41) receiving an element (35) for fixation to the other of the first and of the second subassembly.

13. A component according to any one of claims 9 to 12, wherein at least one waved tab (41) comprises a portion (48) forming an axial reciprocation capability, and the said portion (48) is received in a free space provided circumferentially between the first subassembly and the second subassembly.

14. A component according to any one of the preceding claims, wherein the connecting means (30) is made of steel or of spring steel.

15. A component (1) according to any one of the preceding claims, forming a clutch friction disk.
